(19) Europäisches Patentamt
European Patent Office
Office européen des brevets

(11) **EP 3 068 176 A1**

(12) **EUROPEAN PATENT APPLICATION**

(43) Date of publication:
**14.09.2016 Bulletin 2016/37**

(51) Int Cl.:
*H04W 52/14* (2009.01)       *H04W 52/38* (2009.01)
*H04W 52/24* (2009.01)

(21) Application number: **15305353.3**

(22) Date of filing: **09.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **Gacanin, Haris**
**2018 Antwerpen (BE)**
• **Ho, Lester Tse Wee**
**Dublin (IE)**
• **Claussen, Holger**
**Dublin (IE)**

(74) Representative: **Philippaerts, Yannick et al**
**Arnold & Siedsma**
**Bezuidenhoutseweg 57**
**2594 AC The Hague (NL)**

(54) **Femtocells**

(57)    Method for managing a group of femtocells in a predetermined area, wherein the method comprises a configuration stage and an operational stage, wherein the configuration stage comprises the steps of:
- calculating for each femtocell in the group of femtocells a minimum transmit power in order to achieve cellular coverage within said predetermined area, and
- determining an overload threshold for each femtocell in the group of femtocells, and

wherein the operational stage comprises the steps of:
- measuring a load for each femtocell in the group of femtocells and comparing the measured load with the determined overload threshold, wherein at least one of following steps are executed when the load of a first femtocell is larger than said overload threshold:
- decreasing the transmit power of said first femtocell, and
- increasing the transmit power of a second femtocell neighboring said first femtocell.

FIG. 1

**Description**

Technical Field

The present invention relates to femtocell deployment wherein a group of femtocells are deployed in order to provide cellular coverage within a predetermined area.

Background

In enterprise femtocell deployments, a group of femtocells are deployed in order to provide cellular coverage within a building. Management of such deployments may be challenging for two main reasons. The first main reason is that user traffic distribution within a building tends to be uneven, where some areas having a high concentration of users (demand hotspots) relative to other areas. The effect of this is that femtocells deployed at hotspots can get highly loaded, leading to calls rejected, handover failures and lower user throughputs. The second main reason relates to multi-vendor deployments where a number of devices are deployed from different vendors. This will make distributed algorithms difficult or even impossible to cooperate. Thus, optimization and management of such deployments will be a big problem.
In a single-vendor deployment, manual and automated optimization is possible. Manual optimization involves skilled engineers to perform a site survey in order to estimate the anticipated user demand levels and the radio propagation conditions throughout the building. Cell planning is then performed to determine the location and coverage related settings of the femtocells. Once the femtocells are deployed, further fine tuning is performed, where trial and error is often used. The disadvantage of this approach is that it is slow and very costly, and has to be repeated when changes to the environment and user demand distribution occurs. Automatic optimization in single-vendor deployment involves an algorithm provided by the vendor. In such automated optimization, the coverage of the femtocells is adjusted automatically in order to balance load between cells using measurements made by the femtocell base stations. The adjustment of coverage is typically done through changing the femtocell pilot power transmission power.
In multi-vendor deployments, only manual optimization is possible because different vendors use different algorithms for the same functionality and they are not compatible with each other. In this context, it is noted that the standardization does not specify the algorithms and they are proprietary to each vendor.
It is an object of the present invention to provide a multi-vendor optimization method for femtocell networks wherein cell overload can be prevented.

Summary

To this end, the invention provides a method for managing a group of femtocells in a predetermined area, wherein the method comprises a configuration stage and an operational stage, wherein the configuration stage comprises the steps of:

-   calculating for each femtocell in the group of femtocells a minimum transmit power in order to achieve cellular coverage within said predetermined area, and
-   determining an overload threshold for each femtocell in the group of femtocells, and wherein the operational stage comprises the steps of:
-   measuring a load for each femtocell in the group of femtocells and comparing the measured load with the determined overload threshold, wherein at least one of following steps are executed when the load of a first femtocell is larger than said overload threshold:
-   decreasing the transmit power of said first femtocell, and
-   increasing the transmit power of a second femtocell neighboring said first femtocell.

The configuration stage is preferably performed when the femtocells are initially deployed or when femtocells are added or removed. By calculating a minimum transmit power for each femtocell, room is provided for the femtocells to increase their transmit powers in order to perform load balancing. The benefit of configuring this set of minimum pilot transmit powers is that regardless of the following optimization, full coverage is always guaranteed. Preferably the calculation of the minimum transmit powers is based on the pilot power sniffing to derive the path losses.
The operational stage can also be referred to as the coverage adaptation stage. In this stage, the transmit power of lowly loaded femtocells is increased in order to offload neighbouring femtocells that are highly loaded. This stage is preferably performed continuously, based on femtocell load statistics measurements collected over preferably a sufficiently long period of time, for example over 24 hours. If the load of one of the cells with increased transmit power has increased such that it is serving too many users, its power is reduced until the load is balanced or the minimum power is reached.

It will be clear that in the operational stage, the step of decreasing can only be executed when the transmit power is higher than the minimum transmit power calculated, because of the fact that it is defined as a minimum. The transmit power is not decreased lower than the minimum.

Via the configuration stage and operational stage, multi-vendor optimization is possible for femtocell networks wherein cell overload can be prevented.

Preferably a Broadband Forum TR-069 orchestration layer with the TR-196 Femto Access Point data model is created between each femtocell in the group of femtocells and a management server and wherein the steps are at least partially executed at the management server. The management server and Broadband Forum TR-069 orchestration layer make it easy for multi-vendor femtocells to cooperate in optimizing the network.

Preferably, the step of calculating the minimum transmit power is based on path loss information between femtocells in the group. Path loss is a known technical feature in femtocell technology and can be vendor independently and easily estimated from standardised femtocell measurements. Therefore using the path loss further makes it easy for multi-vendor femtocells to cooperate in optimizing the network. Thereby preferably, the path loss between femtocells is estimated using measurements of the received pilot powers made by femtocells using their sniffing functionality, and knowledge of the pilot transmit powers.

Preferably, the second femtocell neighboring said first femtocell is identified by the step of identifying candidate neighbor cells of said first femtocell. Further preferably the step of identifying candidate neighbor cells further comprises determining whether a cell load of candidate neighbor cells is below a predetermined candidate threshold.

Preferably, the step of decreasing the transmit power of said first femtocell is executed when said first femtocell operates at a transmit power higher than said minimum transmit power. By decreasing the transmit power, the first femtocell automatically starts to offload traffic to neighboring cells.

Preferably, the step of increasing the transmit power of a second femtocell is executed when said first femtocell operates at a transmit power that is substantially equal to said minimum transmit power. By increasing the transmit power of a neighboring cell, the first femtocell offloads traffic to the neighboring cell.

Preferably the steps of increasing and decreasing the transmit power are incrementally executed in predetermined steps. By incrementally increasing or decreasing the transmit power, the effect of the increase or decrease can be easily measured and the increasing and decreasing can be optimally executed without overshoot. Overshoot would result in an instable situation.

Preferably, the predetermined area is one of a residential and an enterprise building. The method of the invention is optimized for managing multi-vendor femtocell networks in residential or enterprise buildings.

The invention further relates to a management server for managing a group of femtocells in a predetermined area, wherein the management server is provided with communication means for communicating with each femtocell in the group of femtocells to orchestrate a configuration stage and an operation stage, wherein the configuration stage comprises the steps of:

- calculating for each femtocell in the group of femtocells a minimum transmit power in order to achieve cellular coverage within said predetermined area, and
- determining an overload threshold for each femtocell in the group of femtocells, and wherein the operational stage comprises the steps of:
- measuring a load for each femtocell in the group of femtocells and comparing the measured load with the determined overload threshold, wherein at least one of following steps are executed when the load of a first femtocell is larger than said overload threshold:
- decreasing the transmit power of said first femtocell, and
- increasing the transmit power of a second femtocell neighboring said first femtocell.

Preferably, a Broadband Forum TR-069 orchestration layer is created between each femtocell in the group of femtocells and the management server and wherein the steps are at least partially executed at the management server.

The invention further relates to a computer readable storage medium comprising instructions, which, when executed cause a data processing apparatus to carry out the steps of the method of the invention.

Brief description of the figures

Some embodiments of apparatus and/or methods in accordance with embodiments of the present invention are now described, by way of example only, and with reference to the accompanying drawings, in which:

figure 1 illustrates a difference in coverage between femtocells operating at maximum transmit power and femtocells operating at the determined, after a configuration stage, minimum transmit power, whilst maintaining coverage within the area;

figure 2 illustrates an example of measured RSRPs of neighbouring femtocells;

figure 3 illustrates an RSRP map of an office scenario, with femtocells at default maximum transmit power;

figure 4 illustrates an RSRP map of the office scenario of figure 3, with femtocells at the determined minimum transmit power;

figure 5 illustrates the reference signal transmit power levels of femtocells after initial configuration phase;

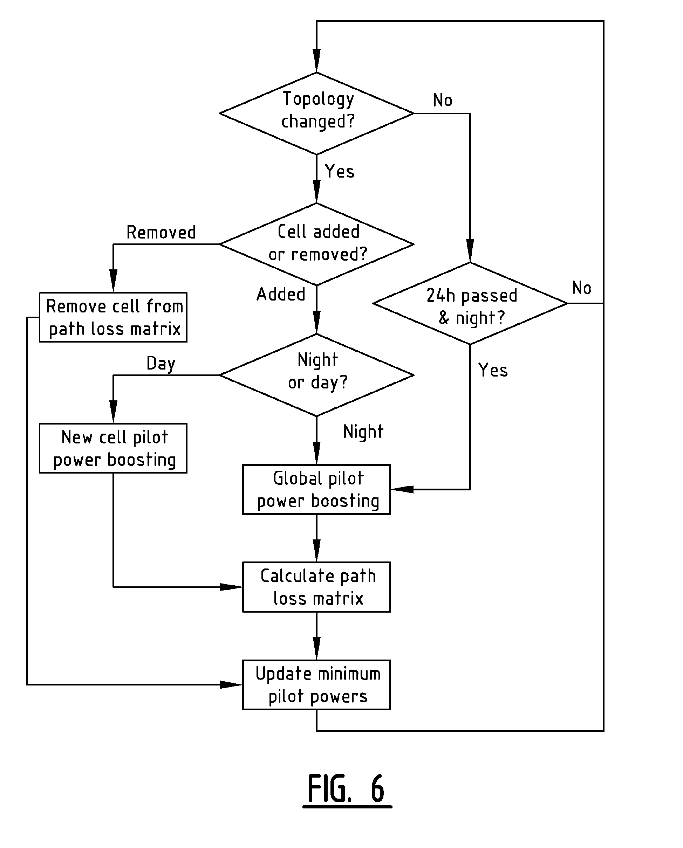

figure 6 illustrates a flowchart for invoking the initial configuration phase;

figure 7 illustrates a coverage adjustment to offload an overloaded cell;

figure 8 illustrates a Femtocell RSRP map and corresponding load before coverage adaptation;

figure 9 illustrates a Femtocell RSRP map and corresponding load after coverage adaptation; and

figure 10 illustrates a femtocell load when overload and underload thresholds are set to achieve a target load.

Detailed description of embodiments

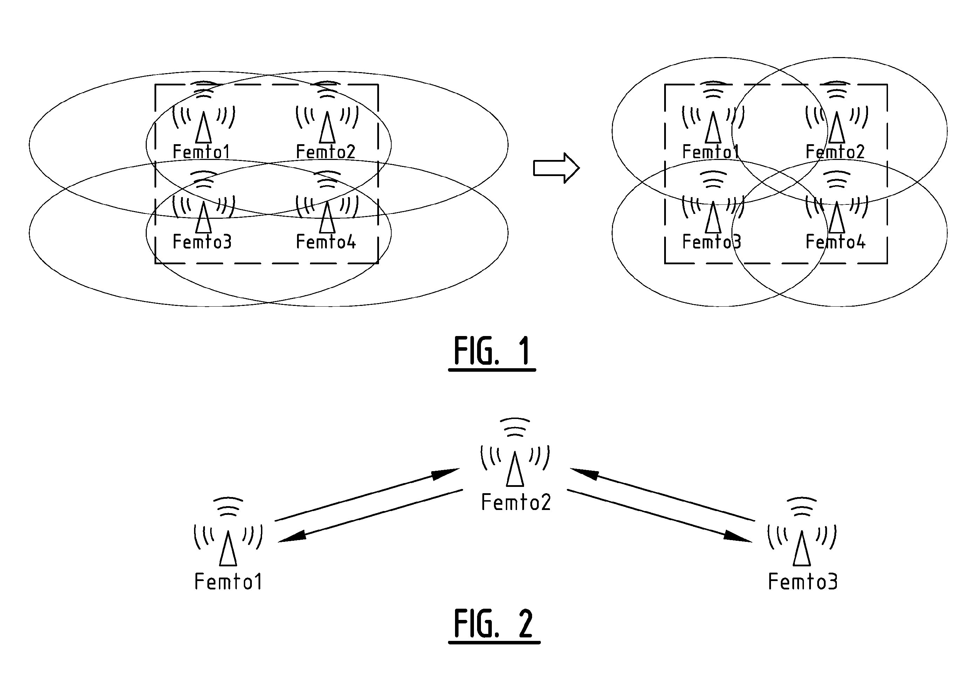

Using an estimated path loss, a required pilot transmit powers in order to provide continuous coverage between a femtocell and its neighbours is calculated. The details of which femtocell "pairs" to use and how the powers are calculated is given in the following section below. The desired effect of this is to achieve similar coverage within the intended area of coverage (e.g. the building), but using a lower transmit power, as illustrated in Figure 1. This provides the required power headroom to enable the coverage optimization in the second phase.

After the calculation of the initial configuration phase, the femtocells now have "room" or "margin" for adjusting their powers. Based on load information of the femtocells, highly loaded cells that are close to overload conditions are identified.

Suitable candidate neighbour cells are then identified and their power (and hence coverage) is increased in order to offload users from the highly loaded cells. This process of collection of load information and adjustment of coverage is done iteratively until no more femtocells are classified as highly loaded, or when no more suitable candidate neighbour cells are available for offload. Thereby it is noted that the proposed method preferably relies on the compliance of femtocells to Broadband Forum TR-196 specification.

Hereunder, an example of the invention is given wherein two assumptions are made. A first assumption is that the femtocells are enterprise femtocells deployed in a group to provide coverage within a building. A second assumption is that the femtocells are managed by a central management entity, for example the ALU Motive CX Management Platform. The management entity is able to request and push parameters to the femtocells by using TR-069 protocol with the TR-196 data model.

First the initial configuration stage is described. In this stage, the approach relies on the measurements made by the femtocells of RSRP received power levels from neighbouring cells, and knowledge of the neighbouring cell's RSRP transmit powers. Within the context of the TR-196 specifications, the relevant parameters are:

- FAPService.{i}.REM.LTE.Cell.{i}.RF.RSRP (measured RSRP)
- FAPService.{i}.CellConfig.LTE.RAN.RF.ReferenceSignalPower

(reference signal transmit power)

Using these two pieces of information, the path losses between femtocells can be estimated. Using the estimated path loss, the reference signals received power (hereafter RSRP) transmit powers of the femtocells can be calculated such that it achieves a set RSRP received power at their neighbouring cell.

Figure 2 illustrates a simplified example of process using three femtocells. In the example of figure 2, Femto 1 has a RSRP transmit power of -4.78 dBm and a RSRP measured from Femto 2 of -90 dBm and Femto 3 is undetectable. Femto 2 has a RSRP transmit power of - 4.78 dBm and a RSRP measured from Femto 1 of -92 dBm and Femto 3 of -72 dBm. Femto 3 has a RSRP transmit power of -4.78 dBm and a RSRP measured from Femto 2 of -70 dBm and Femto 3 is undetectable.

Femtocells 1, 2 and 3 are part of a femtocell group, and their reference signal transmit powers, are known. As part of their initialization, the femtocells transmits at their maximum transmit power (or a predefined power level high enough to reach other neighbouring femtocells). In this example, the maximum transmit powers are -4.78 dBm. The femtocells measures the RSRPs of each of its neighbours that it can detect.

The pathloss between femtocells 1 and 2, $PL_{1,2}$ is calculated as:

$$PL_{1,2} = P\_tx\_max - RSRP_{2,1}$$

Where:

- $P\_tx\_max$ is the maximum reference signal transmit power of femtocell 1 in dBm.
- $RSRP_{1,2}$ is the RSRP of femtocell 1, measured by femtocell 2, in dBm.

Using the example in Figure 2, $PL_{1,2}$ can be estimated as 87.22 dB. The path losses between all the femtocells can be calculated. Note that since Femtocells 1 and 3 cannot detect each other, the path loss between the two cannot be determined, and therefore they are not considered neighbouring cells. A table of path losses between all femtocells and their neighbours can be created, as shown in Table 1 hereunder. Although the path losses (including antenna gains) between two femtocells in both directions (e.g. $PL_{1,2}$ and $PL_{2,1}$) should theoretically be symmetrical, in practice there may be variations in the measurements caused for example due to errors in the hardware that causes asymmetry. Because of this, the path losses between two femtocells are calculated separately in either direction. Thereby it is optional to average the two path losses between two femtocells in order to obtain a common, symmetrical path loss estimate between the femtocell pairs.

Table 1. Table of calculated path losses between femtocells

|  | i = 1 | i = 2 | i = 3 |
|---|---|---|---|
| $PL_{1,i}$ | - | 87.22 dB | n/a |
| $PL_{2,i}$ | 85.22 dB | - | 65.22 dB |
| $PL_{3,i}$ | n/a | 67.22 dB | - |

Once the path losses have been calculated, the minimum transmit powers of each femtocell can be calculated. Referring to Table 1, femtocell 1's only neighbour is femtocell 2, so it will select femtocell 2 as the neighbour it uses to adjust its reference signal transmit power to. If it is assumed that the minimum receive sensitivity of UEs is -120 dBm, then in order to guarantee that the coverage of femtocells 1 and 2 overlap, the transmit power of femtocell can be calculated as follows:

$$P\_tx\_lower_1 = \max\left( RSRP_{min} + PL_{1,2} + P\_tx_{margin}, P\_tx_{min} \right)$$

Where:

- $P\_tx\_lower_1$ is the lowest reference signal transmit power of femtocell 1 in dBm in order to ensure contiguous coverage with its selected neighbour.
- $RSRP_{min}$ is the RSRP receive sensitivity of UEs in dBm (here, a value of -120 dBm is assumed) if the femtocells are using a separate frequency carrier than the macrocell underlay. If co-channel operation with the macrocell is used, then $RSRP_{min}$ should be set as the maximum macrocell RSRP measured by femtocell 2, plus any handover or cell reselection biases that may be applied. Of course, if no co-channel macrocells are detected, then $RSRP_{min}$ is set to the receive sensitivity of UEs.

- $PL_{1,2}$ is the estimated path loss between femtocells 1 and 2 in dB (from Table 1).
- $P\_tx_{margin}$ is the femtocell transmit power margin in dBm. This is added to ensure adequate coverage overlap between the two femtocells, to compensate for potential additional wall losses that were not captured in the path between the two base stations, and to take into account any inaccuracies that may occur when estimating the path losses (here, a value of 5 dB is assumed).
- $P\_tx_{min}$ is the minimum reference signal transmit power of the femtocell, which would be dictated by the hardware (here, a value of -40dBm is assumed).

$P\_tx\_lower_1$ is calculated as -27.78 dBm. Because femtocell 2 has two neighbours, it will calculate its transmit power using the highest pathloss pair amongst all its detected neighbours, which in this case the pathloss between itself and femtocell 1. In very dense femtocell deployments, where the number of detected neighbours are very high, for example 10, the femtocell's transmit power would be calculated using the Nth highest pathloss pair. Table 2 shows the calculated $P\_tx\_lower$ for the femtocells in this example.

Table 2. Calculated $P\_tx\_lower$ of the femtocells in Figure 2

|  | i = 1 | i = 2 | i=3 |
|---|---|---|---|
| $P\_tx\_lower_i$ | -27.78 dBm | -29.78 dBm | -40 dBm |

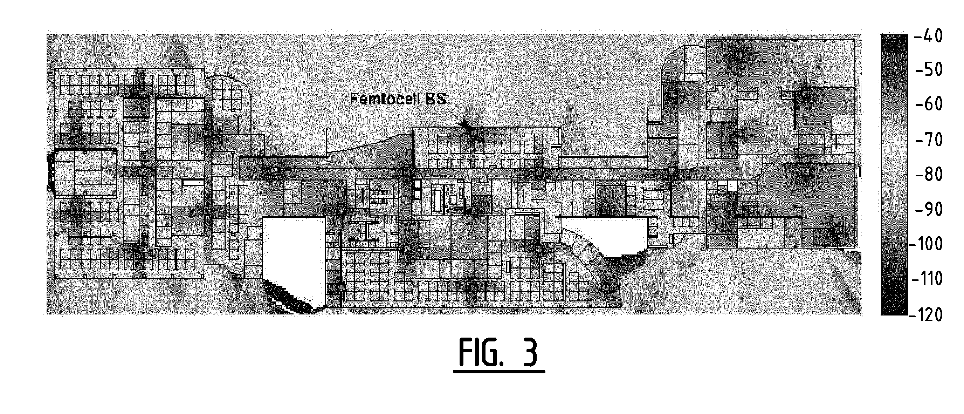

To illustrate the application of the initial configuration stage in a larger example, a simulation of an office environment is performed. Figure 3 shows the map of an office building that is roughly 200m x 70m in size, with 27 femtocells deployed roughly 20m apart from each other. The heatmap illustrates the maximum RSRP received throughout the scenario. The femtocells here are transmitting at a maximum reference signal transmit power of -4.78 dBm.

Alternatively to transmitting at a maximum reference signal transmit power of - 4.89dBm, in the configuration stage the cells can allocate their full power budget to pilot transmissions to make sure no neighbouring cells are detected correctly. As doing this would cause all power to be dedicated to the transmission of reference signal symbols, the femtocells would not be able to serve any users since there would be no power allocated to carry data. Therefore, this is preferably only be done when the whole network is re-configured and low or no load is expected, for example at night.

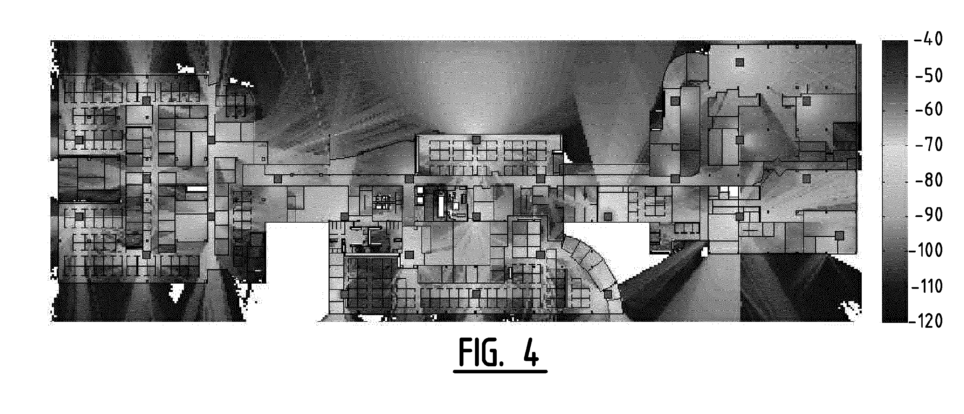

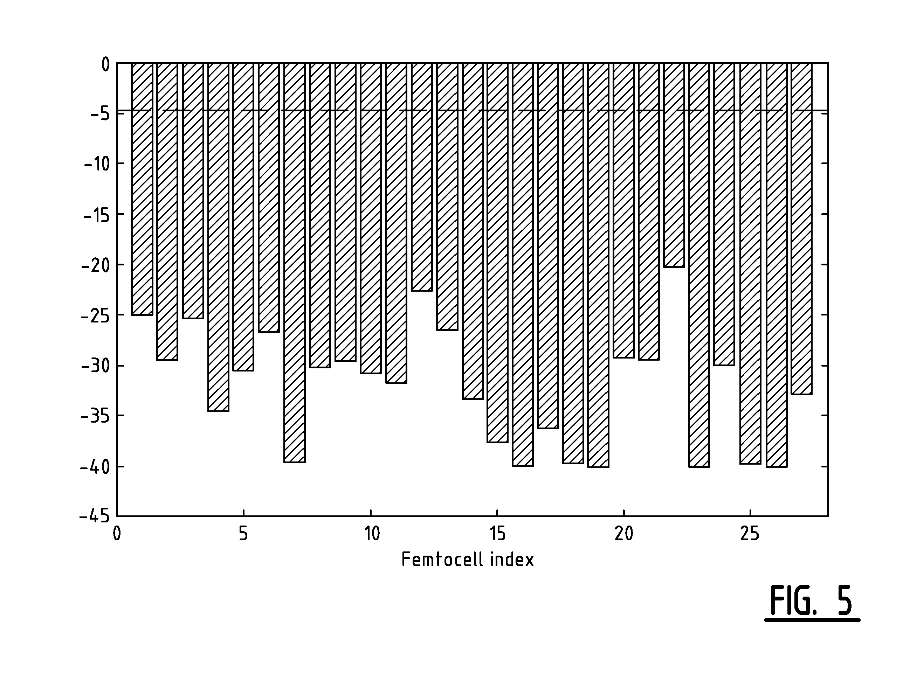

After the initial configuration phase, the minimum reference signal transmit powers are calculated for this office scenario. Figure 4 shows the resulting RSRP with the femtocell transmit powers set to the minimum power levels calculated, and Figure 5 shows the resulting transmit powers used by the femtocells. The results shows that the proposed approach reduces the transmit powers of the femtocells significantly, in the real-life example of figures 4 and 5 by between 15 to 35 dB, without causing any gaps in coverage within the building. Figure 5 shows on the horizontal axis the Femtocell index and on the vertical axis the reference signal transmit power in dBm.

The calculation of the minimum transmit powers are preferably triggered in at least one of following situations:

- New cells are added. If the cells are added during the daytime (or when there are users present), only the new cell's base station transmits at maximum power in order to perform the path loss estimates with its neighbouring cells. This will reduce the accuracy of the estimation, but is less disruptive. If the cells are added during the night (or when no users are present), a global path loss estimate calculation can be made with all base stations transmitting at maximum power.

- Periodically. A global path loss estimate calculation can be performed periodically, for example every 24 hours during the night. This will correct any inaccuracies that have occurred due to new cells being added during the daytime, or due to changes to the environment such as new walls or structures.

- Cells are removed. If an existing cell is removed, the cell is simply removed from the path loss table, and new minimum powers are calculated based on previous measurements.

Once the initial configuration phase is complete, the steps of the operational stage are executed. Thereby, a dynamic load balancing is performed. In this embodiment, the averaged busy hour load of the femtocells over a period of 24 hours is collected, as specified in the counter CSG.MeanNbrUsr in 3GPP TS 32.435.

After a measurement period, the load of each femtocell in the group, $L_i$ is obtained, where i is the ID number of femtocells. Two load threshold parameters are introduced:

- $L\_overload$ is the load value used to identify cells that are overloaded. This value is also considered an overload threshold for a femtocell. This could be set close to the cell's maximum capacity. Alternatively this can be calculated more dynamically based on the average load of the network to a value slightly above the mean load to maximize capacity and headroom for changes in the user distribution without causing overload.

- $L\_candidate$ is the load value less than $L\_overload$, used to identify the suitability of a neighbouring cell as a candidate to offload traffic from the overloaded cell. If the femtocell load is larger than $L\_candidate$, then it is already close to $L\_overload$, and therefore should not be used to offload more traffic.

The first step of the algorithm is to identify all overloaded cells. To this end, the load of each femtocell in the group of femtocells is measured and compared with the overload threshold. If there are overloaded cells whose transmit powers are higher than its $P\_tx\_lower$, then the transmit powers of those cell would be reduced by a set increment, for example by IdB. This reduces their coverage area and offloads traffic to neighbouring cells. If the overloaded cell's transmit powers are already at their $P\_tx\_lower$ values, then a neighbouring cell has to increase its power to perform the offload. In this case, the corresponding "offloading cell" needs to be selected.

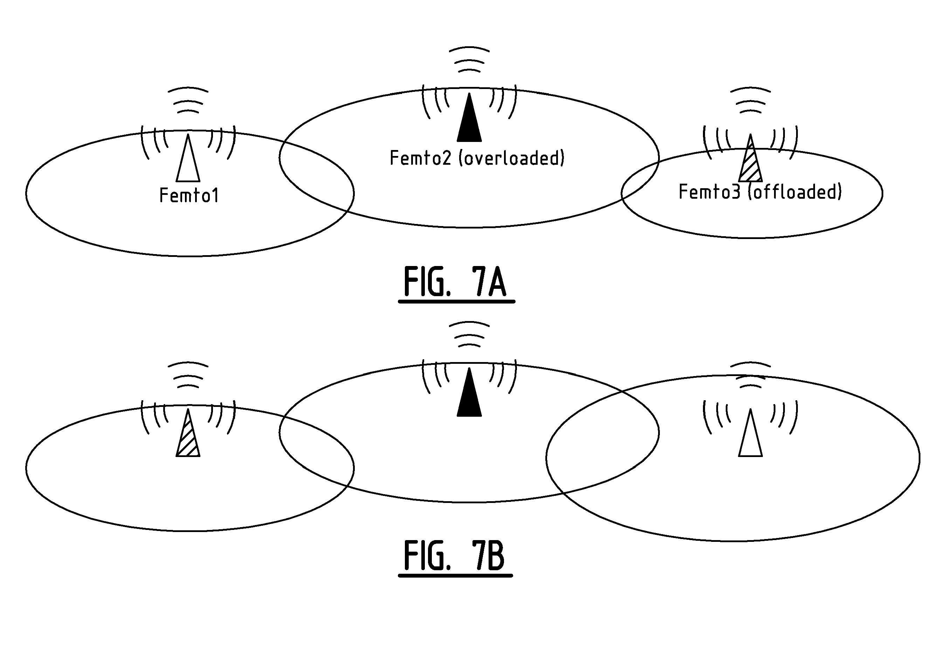

Figure 7a illustrates the load and coverage areas of the femtocells, along with their current reference signal transmit powers, which were calculated in the previous section. $L\_overload$ is set to 10 users, and $L\_candidate$ is set to 8 users in this example. In Figure 7a, Femto 1 has a $P\_tx$ of -27.78 dBm and a load of 2, Femto 2 has a $P\_tx$ of -29.78 dBm and a load of 12 and Femto 3 has a $P\_tx$ of -40 dBm and a load of 7.

Femtocell 2 is therefore classified as overloaded, and the load balancing for overloading is triggered. Referring to Table 1, Femtocell 2 has 2 neighbours: Femtocell 1 and Femtocell 3. The selection of which neighbouring femtocell to be used as the offloading cell is based on the following criteria:

- The transmit power, $P\_tx$, is less than $P\_tx\_max$ (i.e. the maximum transmit power dictated by the hardware).
- The load is less than $L\_candidate$.

The closest neighbor, for example in terms of path loss, is selected as the first candidate offloading cell, which in this example is Femtocell 3. As Femtocell 3 satisfies the two criteria above, it is selected as the offloading cell. Once all the offloading cells have been identified, their transmit powers are increased by a set increment. In this example, the increment is IdB. This completes one iteration of the algorithm. As the algorithm iterates, the transmit power of Femtocell 3, and therefore its coverage, increases and it starts to offload traffic from Femtocell 2. Eventually, the load of Femtocell 3 hits $L\_candidate$, as illustrated in Figure 7b. In Figure 7b, Femto 1 has a $P\_tx$ of -27.78 dBm and a load of 2, Femto 2 has a $P\_tx$ of -29.78 dBm and a load of 11 and Femto 3 has a $P\_tx$ of -35 dBm and a load of 8.

As Femtocell 2 is still overloaded, it still requires neighbouring cells to offload its traffic. As the nearest neighbour (Femtocell 3) no longer satisfies the criteria as an offloading candidate, the next nearest neighbour that satisfies the criteria (Femtocell 1) is selected as the offloading cell, and its transmit power is iteratively increased to offload traffic from Femtocell 2.

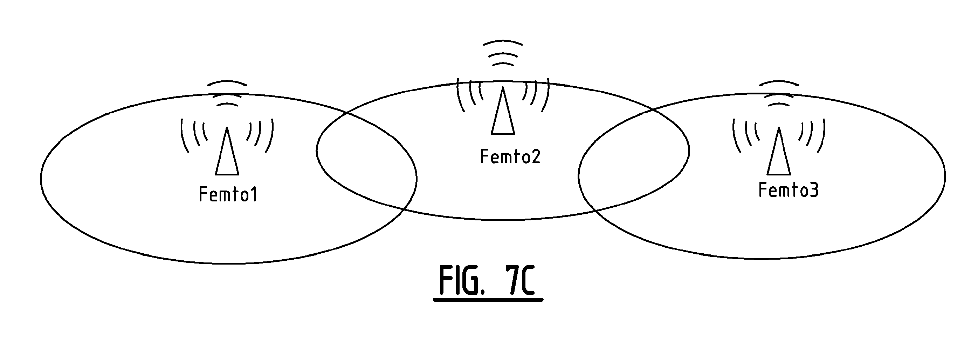

Once Femtocell 2's load falls below $L\_overload$, the load balancing for overload conditions stops, and the transmit powers have converged, as illustrated in Figure 7c. In Figure 7c, Femto 1 has a $P\_tx$ of -20.78 dBm and a load of 4, Femto 2 has a $P\_tx$ of -29.78 dBm and a load of 9 and Femto 3 has a $P\_tx$ of -35 dBm and a load of 8.

Apart from preventing overloaded cells, load balancing can also be performed to prevent femtocells from being underloaded. This is simply performed by increasing the transmit power of femtocells that have a load of less than a threshold $L\_underload$.

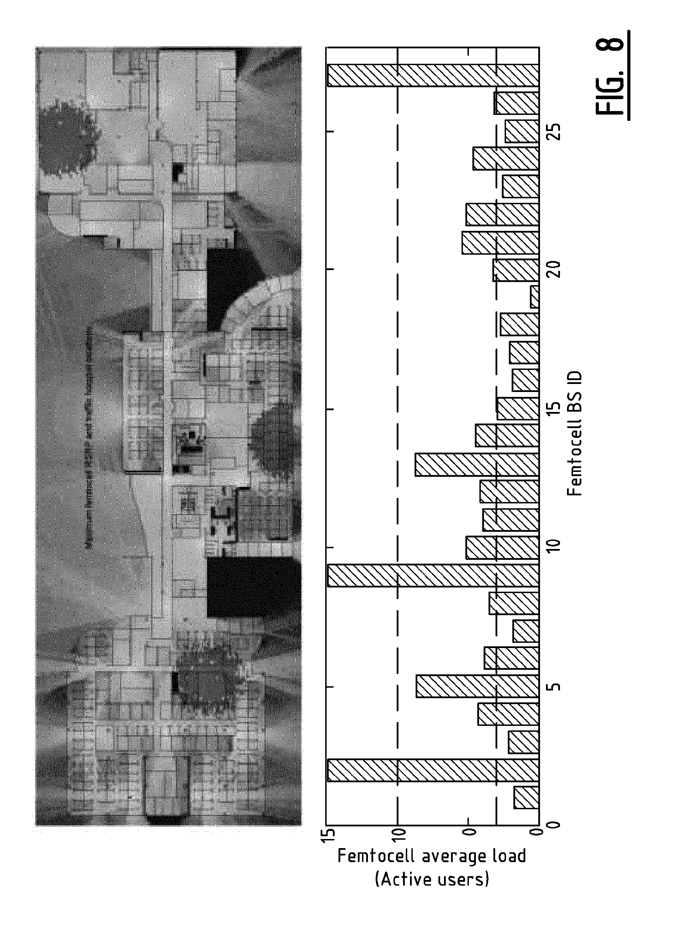

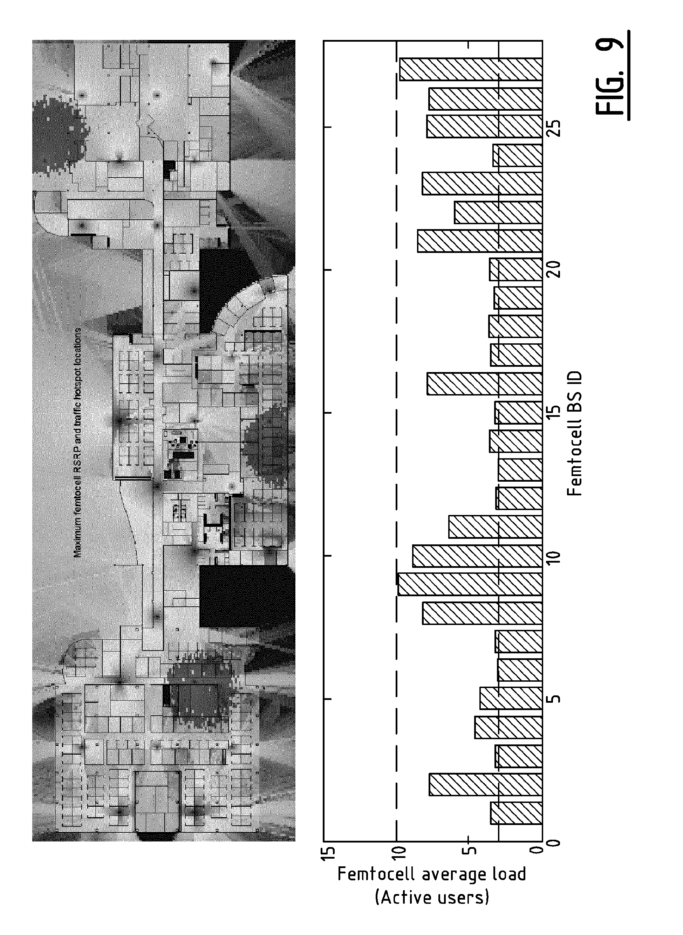

Figure 8 and Figure 9 shows the RSRP map and femtocell loads before and after the coverage adaptation approach is applied to the office environment scenario. Thereby in figure 8, Femtocell 2, 9 and 27 are overloaded while Femtocell 19 is underloaded. With the femtocells using the minimum transmit powers, due to an uneven user demand distribution, some of the femtocells experience load higher than the overload threshold (in the figure the upper dotted line), while some are lower than the underload threshold (in the figure the lower dotted line). After 6 iterations, the coverage is adjusted such that all femtocells have a load between the overload and underload thresholds. When changes are made to the user demand distribution, the coverage of the femtocells responds to eliminate overload or underload conditions.

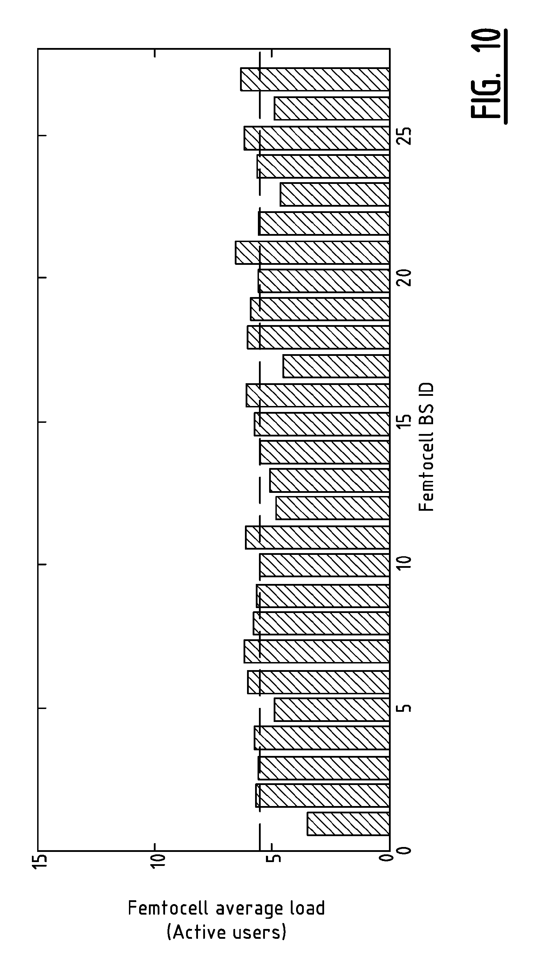

In the above described example, the load thresholds were set to prevent overload and underload conditions. The proposed approach can also be used to attempt to equalize the load amongst all femtocells. This can be done by setting the underload and overload thresholds close to each other, around a target load. In the same scenario shown in Figure 8, the total number of users is 150 and the total number of femtocells is 27, so the target load (dotted line in figure 10) for equalization would be 150/27 = 5.5 users per femtocell. Figure 10 shows the resulting load of the femtocells when the overload and underload thresholds are set to 6 and 5 respectively. Perfect load equalization was in the example not reached, due to factors such as the uneven user distribution, walls and femtocell locations. Oscillations are also more likely to occur when the load thresholds are set close to each other, but this can be overcome stopping the coverage adjustments when oscillations are detected.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1.  Method for managing a group of femtocells in a predetermined area, wherein the method comprises a configuration stage and an operational stage, wherein the configuration stage comprises the steps of:

    - calculating for each femtocell in the group of femtocells a minimum transmit power in order to achieve cellular coverage within said predetermined area, and
    - determining an overload threshold for each femtocell in the group of femtocells, and
    wherein the operational stage comprises the steps of:
    - measuring a load for each femtocell in the group of femtocells and comparing the measured load with the determined overload threshold, wherein at least one of following steps are executed when the load of a first femtocell is larger than said overload threshold:
    - decreasing the transmit power of said first femtocell, and
    - increasing the transmit power of a second femtocell neighboring said first femtocell.

2.  Method according to claim 1, wherein a Broadband Forum TR-069 orchestration layer with the TR-196 data model is created between each femtocell in the group of femtocells and a management server and wherein the steps are at least partially executed at the management server.

3.  Method according to any one of the previous claims, wherein the step of calculating the minimum transmit power is based on path loss information between femtocells in the group.

4.  Method according to claim 3, wherein the path loss between femtocells is estimated using measurements of the received pilot powers made by femtocells using their sniffing functionality, and knowledge of the pilot transmit powers.

5.  Method according to any one of the previous claims, wherein the second femtocell neighboring said first femtocell is identified by the step of identifying candidate neighbor cells of said first femtocell.

6.  Method according to claim 5, wherein the step of identifying candidate neighbor cells further comprises determining whether a cell load of candidate neighbor cells is below a predetermined candidate threshold.

7.  Method according to any one of the previous claims, wherein the step of decreasing the transmit power of said first femtocell is executed when said first femtocell operates at a transmit power higher than said minimum transmit power.

8.  Method according to any one of the previous claims, wherein the step of increasing the transmit power of a second femtocell is executed when said first femtocell operates at a transmit power that is substantially equal to said minimum transmit power.

9.  Method according to any one of the previous claims, wherein the steps of increasing and decreasing the transmit power are incrementally executed in predetermined steps.

**10.** Method according to any one of the previous claims, wherein the predetermined area is one of a residential and an enterprise building.

**11.** Management server for managing a group of femtocells in a predetermined area, wherein the management server is provided with communication means for communicating with each femtocell in the group of femtocells to orchestrate a configuration stage and an operation stage, wherein the configuration stage comprises the steps of:

- calculating for each femtocell in the group of femtocells a minimum transmit power in order to achieve cellular coverage within said predetermined area, and
- determining an overload threshold for each femtocell in the group of femtocells, and
wherein the operational stage comprises the steps of:
- measuring a load for each femtocell in the group of femtocells and comparing the measured load with the determined overload threshold, wherein at least one of following steps are executed when the load of a first femtocell is larger than said overload threshold:
- decreasing the transmit power of said first femtocell, and
- increasing the transmit power of a second femtocell neighboring said first femtocell.

**12.** Management server according to claim 11, wherein a Broadband Forum TR-069 orchestration layer with the TR-196 data model is created between each femtocell in the group of femtocells and the management server and wherein the steps are at least partially executed at the management server.

**13.** A computer readable storage medium comprising instructions, which, when executed cause a data processing apparatus to carry out the steps of the method of any one of the claims 1-10.

FIG. 1

FIG. 2

Femtocell BS

FIG. 3

FIG. 4

FIG. 5

EP 3 068 176 A1

FIG. 6

Femto2 (overloaded)

Femto1

Femto3 (offloaded)

**FIG. 7A**

**FIG. 7B**

**FIG. 7C**

FIG. 8

FIG. 9

FIG. 10

Europäisches
Patentamt

European
Patent Office

Office européen
des brevets

# EUROPEAN SEARCH REPORT

Application Number

EP 15 30 5353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUN LI ET AL: "A Novel Load Balancing Algorithm in IEEE 802.11 Wireless LANs with Cell Breathing", WIRELESS COMMUNICATIONS, NETWORKING AND MOBILE COMPUTING, 2009. WICOM '09. 5TH INTERNATIONAL CONFERENCE ON, IEEE, PISCATAWAY, NJ, USA, 24 September 2009 (2009-09-24), pages 1-4, XP031552800, ISBN: 978-1-4244-3692-7 | 1,2,5-13 | INV. H04W52/14 H04W52/38 H04W52/24 |
| Y | * page 1, right-hand column, line 38 - page 2, left-hand column, line 21; figure 1 * <br> * page 2, right-hand column, lines 10-18 * <br> * page 3, left-hand column, lines 5-18 * <br> * page 3, left-hand column, lines 44-46 * <br> ----- | 3,4 | |
| X | US 2004/229621 A1 (MISRA ARCHAN [US]) 18 November 2004 (2004-11-18) | 1,2,5-13 | |
| Y | * paragraph [0004] * <br> * paragraph [0021] * <br> * paragraph [0036] - paragraph [0037] * <br> * paragraph [0042] - paragraph [0046] * <br> ----- | 3,4 | |
| X | US 2013/109390 A1 (TOKGOZ YELIZ [US] ET AL) 2 May 2013 (2013-05-02) | 1,2,5, 9-13 | |
| A | * paragraph [0028] * <br> * paragraph [0036] - paragraph [0037] * <br> * paragraph [0041] - paragraph [0049]; figure 2 * <br> * paragraph [0053] * <br> ----- | 3,4,6-8 | |

TECHNICAL FIELDS
SEARCHED (IPC)

H04W

-/--

The present search report has been drawn up for all claims

| Place of search | Date of completion of the search | Examiner |
|---|---|---|
| The Hague | 12 August 2015 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EUROPEAN SEARCH REPORT

Application Number

EP 15 30 5353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TD TECH: "TP on the Interference mitigation based on Measurement for 1.28Mcps TDD Home NodeB", 3GPP DRAFT; R4-103080 TP ON HNB MEASUREMENT TD TECH 1.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Madrid, Spain; 20100823, 17 August 2010 (2010-08-17), XP050454149, [retrieved on 2010-08-17] | 3,4 | |
| A | * page 2, point 4 * | 1,2,5-13 | |

TECHNICAL FIELDS SEARCHED (IPC)

The present search report has been drawn up for all claims

| Place of search | Date of completion of the search | Examiner |
|---|---|---|
| The Hague | 12 August 2015 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5353

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2015

| Patent document cited in search report | Publication date | Patent family member(s) | | Publication date |
|---|---|---|---|---|
| US 2004229621 A1 | 18-11-2004 | CN | 1792108 A | 21-06-2006 |
| | | EP | 1625765 A1 | 15-02-2006 |
| | | KR | 20060005362 A | 17-01-2006 |
| | | TW | I318542 B | 11-12-2009 |
| | | US | 2004229621 A1 | 18-11-2004 |
| | | WO | 2004105420 A1 | 02-12-2004 |
| US 2013109390 A1 | 02-05-2013 | CN | 103891333 A | 25-06-2014 |
| | | EP | 2772081 A1 | 03-09-2014 |
| | | JP | 2014534742 A | 18-12-2014 |
| | | KR | 20140092369 A | 23-07-2014 |
| | | US | 2013109390 A1 | 02-05-2013 |
| | | WO | 2013063609 A1 | 02-05-2013 |

EPO FORM P0459

For more details about this annex : see Official Journal of the European Patent Office, No. 12/82